# FASCICULE DE BREVET EUROPEEN

(11) **EP 2 191 459 B1**
(45) Date de publication et mention de la délivrance du brevet: **11.07.2012**
(21) Numéro de dépôt: 08863710.3
(22) Date de dépôt: 26.09.2008
(51) Int. Cl.: G10L 13/04, G10L 15/26, G06F 17/28, H04R 1/10

(54) **Procédé et dispositif de traduction ainsi qu'un casque mis en oeuvre par ledit dispositif**
ÜBERSETZUNGSVERFAHREN UND -VORRICHTUNG SOWIE IN DIESE VORRICHTUNG INTEGRIERTES HEADSET
METHOD AND DEVICE FOR TRANSLATION AS WELL AS A HEADSET IMPLEMENTED BY SAID DEVICE

(30) Priorité: 28.09.2007 FR 0706828
(43) Date de publication de la demande: 02.06.2010
(73) Titulaire: Pedre, Joël, 97480 Saint Joseph (FR)
(72) Inventeur: Pedre, Joël, 97480 Saint Joseph (FR)
(74) Mandataire: Pouillot, Laurent Pierre Paul
(86) Numéro de dépôt international: PCT/FR2008/001359
(87) Numéro de publication internationale: WO 2009/080908

(56) Documents cités:
- US-A- 6 157 727
- US-A1- 2003 115 059
- US-A1- 2004 186 727
- US-A1- 2006 282 269
- US-A1- 2008 077 387
- US-A1- 2008 091 407

## Description

L'invention concerne le domaine de la traduction vocale.

Les hommes communiquent vocalement entre eux en utilisant une pluralité de langues. La plupart des pays ont au moins une langue officielle qui leur est propre et qui diffère des langues pratiquées dans d'autres pays.

Certains hommes ne communiquent pas entre eux en se servant de la langue officielle mais plutôt en langue locale, par exemple en « patois ».

Les moyens de transport se développant de manière importante, comme l'activité économique mondiale.

Par suite, un premier individu risque fortement de devoir communiquer avec un deuxième individu dans une langue qui diffère de sa langue maternelle. Malheureusement, il est impossible de maîtriser et de parler l'ensemble des langues existantes.

On connaît un dispositif qui permet de traduire un texte écrit dans une première langue vers une deuxième langue.

Un individu tape le texte à traduire à l'aide d'un clavier afin qu'un logiciel le traduise dans la deuxième langue. Une fois la traduction réalisée, le logiciel affiche le texte traduit sur un écran.

Ce dispositif est pratique mais reste limité lors d'une conversation orale. Il ne suffit pas de savoir lire la traduction concernée mais il faut de plus être à même de la prononcer correctement pour être compris par son interlocuteur. Si l'utilisateur ne prononce pas correctement la phrase affichée, il risque donc de ne pas être compris.

On connaît alors un autre dispositif qui n'affiche pas la traduction réalisée sur un écran, mais génère un signal vocal représentatif de ladite traduction.

Le signal vocal imitant parfaitement la voie humaine, ce deuxième dispositif répond aux besoins.

Toutefois, il reste fastidieux et peu pratique de devoir saisir le texte à traduire à l'aide d'un clavier.

On connaît, par le document US20060282269, un dispositif qui comporte un boitier parallélépipédique dans lequel est disposé un microprocesseur.

Ce boitier est de plus muni d'un haut-parleur et d'un microphone ainsi que d'au moins une puce électronique contenant le vocabulaire d'une première langue et d'une deuxième langue.

En appuyant sur un bouton, un individu permet au troisième dispositif d'enregistrer les premières paroles prononcées par un premier individu dans la première langue.

En appuyant ensuite sur un autre bouton, l'individu demande au troisième dispositif de traduire les premières paroles enregistrées. Le microprocesseur fait alors appel aux puces électroniques pour procéder à la traduction, et commande au haut-parleur de restituer de façon audible cette traduction des premières paroles.

Ce dispositif constitue donc une avancée technologique importante.

Néanmoins, on constate qu'il est nécessaire de tenir le boitier dans ses mains pour l'utiliser et que les premières paroles traduites proviendront finalement « des mains » du premier individu se servant du troisième dispositif. On comprend donc aisément que la conversation qui en découle ne sera pas naturelle, les interlocuteurs en présence s'adressant en fin de compte au dispositif et non pas l'un à l'autre.

Enfin, ce dispositif semble seulement traduire dans une deuxième langue les propos prononcés dans une première langue. Ainsi, lorsqu'un premier et un deuxième individus conversent ensemble, seules les paroles d'un de ces individus seront traduites. Par suite, il convient que chaque individu utilise son propre dispositif ce qui n'apparaît pas vraiment réaliste, un individu résidant dans son pays maternel ne se promenant pas avec un dispositif de traduction.

L'invention a s'affranchir des limitations des dispositifs de traduction mentionnés ci-dessus, en autorisant une conversation naturelle entre deux individus ne parlant pas la même langue.

Le document US2003115059 décrit un système de traduction en temps réel entre plusieurs langues verbales. Ce système comporte classiquement un microphone, un convertisseur de texte, un convertisseur vocal de traduction, des première et seconde unités de traduction de langage, un convertisseur de texte à vocable. Selon les figures 3 ou 5, ce document prévoit que ce système est au moins en partie interposé à distance entre deux personnes désirant échanger verbalement dans deux langages différents. Un tel système à distance n'est pas portable. Un exemple de réalisation prévoit un casque pourvu de deux haut-parleurs.

Le document US6157727 décrit un système de traduction instantanée qui ne semble posséder qu'un seul microphone et un seul haut parleur.

Le document US2006282269 décrit un boîtier de traduction pouvant être tenu en main, et apte à traduire depuis une première langue vers une seconde langue, une communication verbale captée. Ce boîtier comporte un microphone unique et un haut parleur unique.

Le document US2004186727 décrit une têtière ou oreillette asymétrique, pour la restitution d'une information préenregistrée en réponse à une commande verbale, avec un microphone buccal unique et un haut-parleur unique.

Quant à l'invention, elle est définie par les revendications.

Selon une réalisation, un casque, permettant à un premier individu parlant dans une première langue de converser avec un deuxième individu parlant une deuxième langue distincte de la première langue, est pourvu d'un arceau rigide dont au moins une extrémité est équipée d'un écouteur. Ce casque comporte un microphone et un haut-parleur, le microphone permettant de saisir des premières et des deuxièmes paroles desdits premier et deuxième individus afin que ces premières et deuxièmes paroles soient traduites puis transmises une fois traduites respectivement vers l'écouteur et le haut-parleur.

Par suite, lorsque le premier individu parle, ces premières paroles sont saisies par le microphone, traduites puis restituées une fois traduites par le haut-parleur. Le deuxième individu peut alors comprendre les propos du premier individu.

De même, lorsque le deuxième individu parle, ces deuxièmes paroles sont saisies par le microphone, traduites puis restituées une fois traduites par l'écouteur agencé contre une oreille du premier individu. Ce premier individu peut donc aussi comprendre les propos du deuxième individu.

De plus, le casque est équipé pour que la traduction soit bilatérale, les propos du premier individu et du deuxième individu étant tous deux traduits. Le casque ne se contente pas de restituer les deuxièmes paroles traduites d'un deuxième individu via un ou des écouteurs, mais restitue aussi les premières paroles traduites d'un premier individu via un haut-parleur ce qui est extrêmement surprenant dans la mesure où un casque est habituellement un équipement personnel apte à remplir uniquement la première fonction précitée.

En outre, le casque se trouvant uniquement sur la tête du premier individu, les premières paroles traduites du premier individu semblent provenir de sa bouche ce qui rend la conversation naturelle.

Pour accentuer cet avantage, le microphone étant solidarisé à un axe flexible qui est agencé sur l'extrémité de l'arceau afin que le premier individu puisse disposer le microphone en vis-à-vis de sa bouche, le haut-parleur est agencé sur cet axe flexible à proximité du microphone, de préférence contre ce microphone.

Par conséquent, les premières paroles traduites du premier individu semblent bien sortir de sa bouche et non pas d'un appareil disposé dans sa main ou sa poche par exemple.

Par ailleurs, le casque est muni d'un organe de réglage pourvu d'un premier et d'un deuxième moyens de réglage, tels que des molettes, pour respectivement régler le volume sonore de l'écouteur et du haut-parleur.

Le casque étant relié à un moyen de traduction par un moyen de liaison, une liaison filaire ou sans fil usuelle, les premier et deuxième moyens de réglage sont agencés sur ce moyen de liaison.

Une réalisation de l'invention vise un dispositif de traduction complet mettant en oeuvre le casque évoqué.

Ce dispositif de traduction, permettant à un premier individu parlant dans une première langue de converser avec au moins un deuxième individu parlant une deuxième langue distincte de ladite première langue, comporte un moyen de traduction traduisant les premières paroles du premier individu dans la deuxième langue et les deuxièmes paroles du deuxième individu dans la première langue. Ce moyen de traduction peut alors utiliser la technologie de reconnaissance vocale et de traduction utilisée dans des modèles existants de l'art antérieur.

Néanmoins, le dispositif est remarquable en ce qu'il est pourvu d'un casque selon l'invention relié au moyen de traduction par un moyen de liaison, une liaison filaire ou sans fil, ce casque étant muni d'un écouteur, d'un microphone et d'un haut-parleur. Le microphone saisit alors des premières paroles du premier individu et des deuxièmes paroles du deuxième individu afin que ces première et deuxième paroles soient traduites par le moyen de traduction puis transmises une fois traduites respectivement vers l'écouteur et le haut-parleur. Le procédé mis en oeuvre par le dispositif sera explicité ci-dessous.

Selon une réalisation, le casque comporte un moyen de sélection activable par le premier individu, ce moyen de sélection indiquant au moyen de traduction s'il doit traduire les propos échangés, à savoir soit les premières paroles soit les deuxièmes paroles, envoyés par le microphone dans la première langue et les transmettre à l'écouteur ou s'il doit traduire ces propos envoyés par le microphone dans la deuxième langue et les transmettre au haut-parleur.

Le moyen de sélection est alors par exemple agencé sur le moyen de liaison du casque.

Selon une réalisation, le moyen de traduction comporte un moyen de sélection activable par le premier individu, ce moyen de sélection indiquant au moyen de traduction s'il doit traduire les propos échangés, à savoir soit les premières paroles soit les deuxième paroles, envoyés par le microphone dans la première langue et les transmettre à l'écouteur ou s'il doit traduire ces propos envoyés par le microphone dans la deuxième langue et les transmettre au haut-parleur.

Selon une réalisation, le moyen de traduction comporte un moyen d'identification lui permettant de déterminer si les propos échangés, à savoir soit les premières paroles soit les deuxième paroles, envoyés par ledit microphone sont exprimés dans la première langue ou la deuxième langue, le moyen de traduction traduisant ces propos dans la deuxième langue avant de les envoyer vers l'écouteur du casque si les propos sont exprimés dans la première langue et traduisant ces propos dans la première langue avant de les envoyer vers le haut-parleur du casque si les propos sont exprimés dans la deuxième langue.

Pour résumer, le dispositif peut comporter un moyen pour déterminer si le moyen de traduction doit traduire les premières paroles du premier individu ou les deuxièmes paroles du deuxième individu. Selon les premier et deuxième modes de réalisation, ce moyen est un moyen de sélection activable par le premier individu agencé respectivement sur le casque ou le moyen de traduction, alors que, selon le troisième mode de réalisation, il consiste en un moyen d'identification du moyen de traduction.

En effet, selon ce troisième mode de réalisation, le moyen de traduction peut déterminer si les propos saisis par le microphone sont prononcés dans la première ou la deuxième langue à l'aide d'un moyen d'identification.

Par ailleurs, le moyen de traduction comportant une mémoire primaire apte à contenir le vocabulaire utilisé par une pluralité de langues distinctes, le moyen de traduction est muni d'un moyen d'élection pour définir la nature des première et deuxième langues. Ainsi, le moyen de traduction possède dans sa mémoire primaire une pluralité de langues préprogrammées, l'utilisateur pouvant choisir les langues à utiliser à l'aide du moyen d'élection.

De plus, le moyen de traduction comportant une mémoire primaire apte à contenir le vocabulaire utilisé par une pluralité de langues distinctes, le moyen de traduction est pourvu d'un moyen de téléchargement pour enregistrer une nouvelle langue dans la mémoire primaire.

Si le premier individu ne possède pas la langue requise sur son dispositif, il peut alors utiliser le moyen de téléchargement pour enregistrer cette nouvelle langue sur son dispositif.

Ce moyen de téléchargement peut comporter des moyens usuels de connexion à des réseaux informatiques pour avoir accès à une base de données exhaustive contenant l'intégralité ou presque des langues parlées dans le monde.

En outre, le moyen de traduction comportant un écran de visualisation, les premières et deuxièmes paroles traduites par le moyen de traduction sont d'une part transmises une fois traduites respectivement vers l'écouteur et le haut-parleur, et d'autre part, éventuellement écrites sur l'écran de visualisation.

Ainsi, une panne des écouteurs ou du haut-parleur ne mettra pas nécessairement fin à la conversation.

Enfin, il est avantageux que le moyen de traduction comporte une mémoire secondaire apte à enregistrer la première parole et la deuxième parole, qu'il s'agisse de première et deuxièmes paroles originelles ou traduites.

Le moyen de traduction remplit alors une fonction supplémentaire très utile, par exemple lorsqu'un premier individu demande à un deuxième individu de lui indiquer la route à suivre pour se rendre dans un lieu déterminé. Le premier individu ne sera pas dans l'obligation de retenir les explications du deuxième individu puisqu'il aura de nouveau accès aux explications concernées en consultant la mémoire secondaire de son moyen de traduction.

L'invention a pour objet un procédé pour permettre à un premier individu parlant dans une première langue de converser avec un deuxième individu parlant une deuxième langue distincte de la première langue, au cours duquel on procède successivement aux étapes suivantes durant une phase d'émission
a1) un microphone saisit des premières paroles originelles prononcées par le premier individu dans la première langue et envoie vers un moyen de traduction un premier signal non traduit relatif à ces premières paroles originelles,
a2) le moyen de traduction convertit le premier signal non traduit en un premier signal traduit correspondant à des premières paroles traduites, ces premières paroles traduites étant la traduction dans ladite deuxième langue des premières paroles originelles, et
a3) ledit moyen de traduction envoie le premier signal traduit vers le haut-parleur qui le convertit en premières paroles traduites en émission audibles,

De plus, on procède successivement aux étapes suivantes durant une phase de réception
b1) un microphone saisit des deuxièmes paroles originelles prononcées par le deuxième individu dans la deuxième langue et envoie vers un moyen de traduction un deuxième signal non traduit relatif à ces deuxièmes paroles originelles,
b2) le moyen de traduction convertit le deuxième signal non traduit en un deuxième signal traduit correspondant à des deuxièmes paroles traduites, ces deuxièmes paroles traduites étant la traduction dans la première langue des deuxièmes paroles originelles, et
b3) le moyen de traduction envoie le deuxième signal traduit vers au moins un écouteur qui le convertit en deuxièmes paroles traduites audibles.

Avantageusement, le dispositif comportant un moyen de sélection, au cours d'une étape préliminaire, le premier individu actionne le moyen de sélection pour indiquer au moyen de traduction s'il est sollicité dans le cadre de la phase de réception ou de la phase d'émission, c'est-à-dire pour déterminer si le premier signal qu'il reçoit est un premier signal non traduit ou un deuxième signal non traduit, afin d'estimer s'il doit mettre en oeuvre les étapes a2) et a3) ou les étapes b2) et b3). Selon un premier mode de réalisation, le moyen de sélection est agencé sur le moyen de liaison du casque, alors que selon un deuxième mode de réalisation, le moyen de sélection est agencé sur le moyen de traduction.

Selon un troisième mode de réalisation, le moyen de traduction comportant un moyen d'identification lui permettant de déterminer si les propos envoyés par le microphone sont exprimés dans la première langue ou dans la deuxième langue, le moyen de traduction utilise son moyen d'identification pour savoir s'il est sollicité dans le cadre de la phase de réception ou de la phase d'émission, c'est-à-dire pour déterminer si le premier signal qu'il reçoit est un premier signal non traduit ou un deuxième signal non traduit, afin d'estimer s'il doit mettre en oeuvre les étapes a2) et a3) ou les étapes b2) et b3).

L'invention et ses avantages apparaîtront avec plus de détails dans le cadre de la description qui suit avec des exemples de réalisation donnés à titre illustratif en référence aux figures annexées qui représentent :
- la figure 1, une vue schématique du dispositif de traduction selon un premier mode de réalisation,
- la figure 2, une vue schématique du dispositif de traduction selon un deuxième mode de réalisation, et
- la figue 3, une vue schématique du dispositif de traduction selon un troisième mode de réalisation.

Les éléments présents dans plusieurs figures distinctes sont affectés d'une seule et même référence.

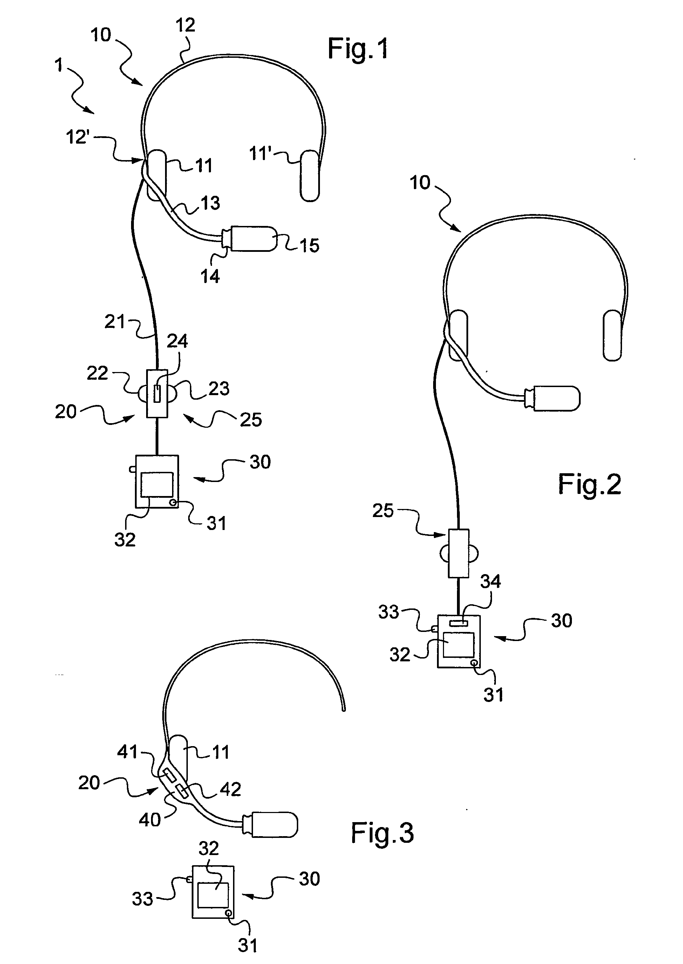

La figure 1 présente un vue schématique d'un dispositif de traduction 1 selon un premier mode de réalisation, ce dispositif de traduction 1 permettant à un premier individu parlant dans une première langue de converser avec un deuxième individu parlant une deuxième langue distincte de ladite première langue.

Le dispositif de traduction 1, agencé sur un premier individu, est équipé d'un casque 10 et d'un moyen de traduction 30 reliés entre eux par un moyen de liaison 20.

Le casque 10 comporte un arceau 12 qui s'adapte à la forme du crane du premier individu, une extrémité 12' de l'arceau étant munie d'un écouteur 11.

Il est à noter que l'autre extrémité de l'arceau est aussi munie d'un écouteur 11', bien que cette disposition soit optionnelle comme le montre à titre d'exemple la figure 3.

De plus, le casque 10 est pourvu d'un axe flexible 13 articulé sur l'extrémité 12' de l'arceau pourvu de l'écouteur 11. Un microphone 14 et un haut-parleur 15 sont alors solidarisés à cet axe flexible 13.

Par suite, la flexibilité de l'axe flexible 13 permet au premier individu de disposer le microphone 14 et le haut-parleur 15 en vis-à-vis de sa bouche.

En outre, le casque 12 est muni d'un moyen de liaison 20, à savoir un moyen de liaison filaire 21 pour la variante représentée sur les figures 1 et 2.

Ce moyen de liaison filaire 21 a avantageusement un organe de réglage 25 pourvu d'un premier et d'un deuxième moyens de réglage 22, 23, tels que des mollettes de réglage par exemple.

Ces premier et deuxième moyens de réglage 22, 23 servent à régler le volume des sons sortant respectivement des écouteurs 11, 11' et du haut-parleur 15.

Le casque 12 est donc lié à un moyen de traduction 30 via un moyen de liaison 20 qui est par exemple disposé dans une poche du premier individu.

Ce moyen de traduction 30, alimenté électriquement par une batterie non représentée, est d'une part apte à traduire dans une deuxième langue les premières paroles prononcées dans une première langue par le premier individu, et, d'autre part apte à traduire dans la première langue les deuxièmes paroles prononcées dans la deuxième langue par un deuxième individu ne disposant pas d'un traducteur automatique.

Conformément au procédé mis en oeuvre par le dispositif de traduction 1, on peut distinguer deux phases distinctes, à savoir une phase d'émission au cours de laquelle le premier individu parle en utilisant une première langue, et une phase de réception au cours de laquelle le deuxième individu parle en utilisant une deuxième langue.

En ce qui concerne la phase d'émission, durant une étape a1), le microphone 14 du casque 10 saisit les premières paroles originelles prononcées par le premier individu dans ladite première langue.

De manière classique, le microphone transforme ces premières paroles originelles en un premier signal non traduit, et envoie ce premier signal non traduit au moyen de traduction via son moyen de liaison 20.

Durant une étape a2) le moyen de traduction 30 traduit les premières paroles originelles. Plus précisément, à l'aide de moyens et d'algorithmes connus, il transforme le premier signal non traduit en un premier signal traduit, ce premier signal traduit correspondant à des premières paroles traduites et donc à la traduction des premières paroles originelles dans la deuxième langue.

Enfin, durant une étape a3), le moyen de traduction 30 envoie le premier signal traduit au haut-parleur 15 via le moyen de liaison 20. Le haut-parleur 15 transforme à son tour le premier signal traduit en des premières paroles traduites audibles par le deuxième individu notamment, mais aussi par le premier individu.

Le deuxième individu entend donc des propos qu'il peut comprendre puisqu'ils sont exprimés dans sa langue, à savoir la deuxième langue. Ces propos paraissent de plus avoir été prononcés par le premier individu dans la mesure où ils s'échappent d'un haut-parleur 15 situé en vis-à-vis de la bouche du premier individu.

Même si l'ensemble haut-parleur 15/ microphone 14 peut éventuellement paraître inesthétique, il n'en demeure pas moins discret, ce qui rend la conversation très naturelle.

En ce qui concerne la phase de réception, durant une étape b1), le microphone 14 du casque 10 saisit les deuxièmes paroles originelles prononcées par le deuxième individu dans ladite deuxième langue.

De manière classique, le microphone 14 transforme ces deuxièmes paroles originelles en un deuxième signal non traduit, et envoie ce deuxième signal non traduit au moyen de traduction 30 via son moyen de liaison 20.

Durant une étape b2) le moyen de traduction 30 traduit les deuxièmes paroles originelles. Plus précisément, à l'aide de moyens et d'algorithmes connus, il transforme le deuxième signal non traduit en un deuxième signal traduit, ce deuxième signal traduit correspondant à des deuxièmes paroles traduites et donc à la traduction des deuxièmes paroles originelles dans la première langue.

Enfin, durant une étape b3), le moyen de traduction 30 envoie le deuxième signal traduit aux écouteurs 11, 11' via le moyen de liaison 20. Les écouteurs 11, 11' transforment à leur tour le deuxième signal traduit en des deuxièmes paroles traduites audibles par le premier individu.

Par conséquent, le microphone 14 permet de saisir des premières et des deuxièmes paroles originelles prononcées par les premier et deuxième individus afin que ces premières et deuxièmes paroles originelles soient traduites par le moyen de traduction 30 puis transmises une fois traduites respectivement vers les écouteurs 11, 11' et le haut-parleur 15.

Le dispositif de traduction 1 et le procédé mis en oeuvre sont déjà très efficaces. Néanmoins, if est possible de faciliter le travail du moyen de traduction 30 en lui donnant les moyens de savoir s'il est confronté à une phase d'émission ou une phase de réception.

Selon le premier mode de réalisation représenté par la figure 1, le dispositif de traduction 1, et plus particulièrement son casque 10, est muni d'un moyen de sélection 24. En faisant basculer ce moyen de sélection, tel qu'un premier interrupteur disposé sur le moyen de réglage 25 du casque 10, le premier individu indique au moyen de traduction s'il doit mettre en oeuvre la phase de réception ou la phase d'émission.

Par exemple, le premier individu va placer le premier interrupteur dans une première position, avant de parler, pour indiquer au moyen de traduction qu'il devra suivre les étapes a2) et a3) du procédé pour traduire ces premières paroles originelles en des premières paroles traduites.

Par contre, lorsque le deuxième individu parlera, le premier individu va disposer le premier interrupteur dans une deuxième position, avant de parler, pour indiquer au moyen de traduction qu'il devra suivre les étapes b2) et b3) du procédé pour traduire ces deuxièmes paroles originelles en des deuxièmes paroles traduites.

En référence à la figure 2, selon un deuxième mode de réalisation, le dispositif de traduction est toujours muni d'un moyen de sélection, mais ce moyen de sélection 34 est agencé sur le moyen de traduction 30 et non pas sur le moyen de réglage 25 du casque 10.

Enfin, selon un troisième mode de réalisation représenté sur la figure 3, le dispositif de traduction ne comporte pas de moyen de sélection.

Par contre, le moyen de traduction 30 est alors équipé d'un moyen d'identification, un microprocesseur programmé à cet effet par exemple, apte à déterminer en quelle langue ont été prononcées les paroles originelles étant à l'origine du signal qu'il reçoit. Le moyen d'identification détermine si les propos saisis par le microphone ont été exprimés dans la première ou la deuxième langue. Lorsque le moyen d'identification a rempli sa fonction, le moyen de traduction peut donc savoir s'il doit mettre en oeuvre les étapes a2) et a3) du procédé ou les étapes b2) et b3).

Quel que soit le mode de réalisation choisi, le moyen de traduction 30 comporte une mémoire primaire, non représentée sur les figures, sur laquelle sont stockées toutes les données relatives à une pluralité de langues et permettant au moyen de traduction de réaliser les traductions souhaitées. Au minimum, on trouve nécessairement le vocabulaire des premières et deuxièmes langues.

Néanmoins, il est possible que cette mémoire primaire possède une grande capacité de stockage et puisse contenir les données relatives à au moins trois langues distinctes. Le premier individu qui utilise le dispositif dispose alors d'un moyen d'élection pour déterminer quelles sont les première et deuxième langues choisies.

Ce moyen d'élection peut comprendre un écran de visualisation 32 sur lequel s'affiche la liste des langues disponibles et une molette 34 avec laquelle le premier individu va sélectionner les première et deuxième langues élues.

On note qu'avantageusement les premières et deuxièmes paroles traduites par le moyen de traduction sont d'une part transmises une fois traduites respectivement vers les écouteurs 11, 11' et le haut-parleur 15, et d'autre part, éventuellement écrites sur l'écran de visualisation.

Ainsi, une panne des écouteurs ou du haut-parleur ne mettra pas nécessairement fin à la conversation.

De plus, il est avantageux que le moyen de traduction soit pourvu d'un moyen de téléchargement 30, tel qu'une prise dédiée, pour actualiser ladite mémoire primaire et la liste des langues disponibles.

Le premier individu pourra, via ce moyen de téléchargement, accéder à un réseau informatique pour télécharger sur son moyen de traduction toutes les données relatives à une nouvelle langue.

En référence à la figure 3, le moyen de liaison 40 du casque 12 vers le moyen de traduction 30 est un moyen de liaison sans fil 40 muni d'un premier et d'un deuxième moyens de réglage 41, 42. Il est aussi possible d'envisager l'intégration d'un moyen de sélection conforme au premier mode de réalisation de l'invention sur ce moyen de liaison sans fil.

Par ailleurs, on constate que l'arceau 12 du casque 10 comporte un unique écouteur 11.

Enfin, il est avantageux que le moyen de traduction comporte une mémoire secondaire, non représentée sur les figures, apte à enregistrer les première et deuxièmes paroles, qu'il s'agisse de première et deuxièmes paroles originelles ou traduites.

Le moyen de traduction remplit alors une fonction supplémentaire de type magnétophone par exemple. Cette fonction supplémentaire peut être commandée par le premier individu en action un moyen usuel, tel qu'un bouton-poussoir.

Naturellement, la présente invention est sujette à de nombreuses variations quant à sa mise en oeuvre. Bien que plusieurs modes de réalisations aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Par exemple, il est possible d'utiliser le dispositif selon l'invention en tant que moyen d'apprentissage d'une langue.

A cet effet, le moyen de traduction comporte un actionneur pouvant sélectionner un mode de fonctionnement « traduction » décrit précédemment, ou un mode de fonctionnement « enseignement ».

Dans ce mode de fonctionnement « enseignement » particulier, le microphone 14 saisit les premières paroles du premier individu. Ces premières paroles sont alors traduites par le moyen de traduction qui les transmet une fois traduites vers les écouteurs et non pas vers le haut-parleur.

Si le premier individu désire obtenir la traduction d'un mot ou d'une phrase pour enrichir ses propres connaissances, il pourra alors utiliser le mode de fonctionnement « enseignement ».

Il est aussi possible de combiner les deux modes de fonctionnement. Les premières paroles traduites seront alors envoyées à la fois aux écouteurs et au haut-parleur. Le premier individu pourra ensuite couper le volume sonore du haut-parleur pour simuler le mode de fonctionnement « enseignement » décrit ci-dessus.

Enfin, le moyen de traduction envisagé dans le dispositif peut évidemment être le moyen de traduction décrit par les figures.

Toutefois, il est possible d'envisager de raccorder le casque selon l'invention à un ordinateur qui se chargera de la traduction.

Une autre solution consiste à brancher le casque sur un appareil permettant de relier le casque à une agence de traduction spécialisée, le moyen de traduction comportant alors un moyen de connexion à distance, tel qu'un téléphone portable, reliant le casque à une personne physique faisant office de traducteur.

## Revendications

1. Casque (10) de traduction entre une première langue de conversation et une deuxième langue de conversation, distincte de ladite première langue, ledit casque (10) comportant : un arceau (12) rigide dont au moins une extrémité (12') est équipée d'au moins un écouteur (11, 11'), d'un microphone (14) à placer en vis-à-vis de la bouche, de moyens de liaison (20) à un moyen (30) de traduction entre les première et deuxième langues de conversation ; le microphone (14) étant relié de façon à saisir les première et deuxième langues de conversation, puis à les transmettre au moyen de traduction (30) par les moyens de liaison (20) et l'écouteur (11, 11') étant relié pour transmettre une traduction dans la première langue de conversation depuis la deuxième langue de conversation ; un haut-parleur (15) du casque (10) étant relié par les moyens de liaison (20) pour transmettre une traduction dans la seconde langue de conversation depuis la première langue de conversation, afin que les première et deuxième langues soient transmises une fois traduites respectivement vers ce haut-parleur (15) et l'écouteur (11, 11') **caractérisé en ce que** le microphone (14) est solidarisé à un axe flexible (13) qui est agencé sur ladite extrémité (12') ; le haut-parleur (15) étant agencé sur cet axe flexible (13) à proximité dudit microphone (14) ; ce casque (10) comportant : un premier moyen de sélection (24) de traduction dans la première langue à transmettre à l'écouteur (11, 11') ou de traduction dans la deuxième langue à transmettre au haut-parleur (15) ; et le moyen de traduction (30) comporte un autre moyen de sélection (34) d'indication de traduction dans la première langue pour l'écouteur (11, 11') ou de traduction dans la deuxième langue pour le haut-parleur (15).

2. Casque (10) selon la revendication 1, **caractérisé en ce qu'**il est muni d'un organe de réglage (25) pourvu d'un premier et d'un deuxième moyens de réglage (22, 23) pour respectivement régler le volume sonore de l'écouteur (11, 11') et du haut-parleur (15).

3. Dispositif (1) de traduction entre une première langue de conversation et une deuxième langue de conversation, distincte de ladite première langue, ce dispositif comportant un casque (10) selon l'une des revendications 1 ou 2, **caractérisé en ce que** ledit microphone (14) est relié de façon à saisir les première et deuxième langues de conversation, puis à les transmettre au moyen de traduction (30) par les moyens de liaison (20) ; l'écouteur (11, 11') étant relié par les moyens de liaison (20) pour transmettre une traduction dans la première langue de conversation effectuée par le moyen de traduction (30) depuis la deuxième langue de conversation ; le haut-parleur (15) étant relié par les moyens de liaison (20) pour transmettre une traduction dans la seconde langue de conversation effectuée par le moyen de traduction (30) depuis la première langue de conversation, afin que les première et deuxième langues soient transmises une fois traduites respectivement vers le haut-parleur (15) et l'écouteur (11, 11').

4. Dispositif (1) selon la revendication 3, **caractérisé en ce que** le premier moyen de sélection (24) est agencé pour indiquer au moyen de traduction (30) s'il doit traduire les propos envoyés par le microphone (14) dans la première langue et les transmettre à l'écouteur (11, 11') ou si ce moyen de traduction (30) doit traduire ces propos envoyés par le microphone (14) dans la deuxième langue et les transmettre au haut-parleur (15).

5. Dispositif (1) selon la revendication 3, **caractérisé en ce que** le moyen de sélection (34) activable, est agencé pour indiquer au moyen de traduction (30) s'il doit traduire les propos envoyés par le microphone (14) dans la première langue et les transmettre à l'écouteur (11, 11') ou si le moyen de traduction (30) doit traduire ces propos envoyés par le microphone (14) dans la deuxième langue et les transmettre au haut-parleur (15).

6. Dispositif (1) selon la revendication 3, **caractérisé en ce que** le moyen d'identification permet au moyen de traduction (30) de déterminer si les propos envoyés par le microphone (14) sont exprimés dans la première langue ou la deuxième langue, le moyen de traduction (30) traduisant ces propos dans la deuxième langue avant de les envoyer vers l'écouteur (11, 11') si les propos sont exprimés dans la première langue et le moyen de traduction (30) traduisant ces propos dans la première langue avant de les envoyer vers le hautparleur (15) si les propos sont exprimés dans la deuxième langue.

7. Dispositif (1) selon la revendication 3, **caractérisé en ce que** le moyen de traduction (30) comportant une mémoire primaire apte à contenir le vocabulaire utilisé par une pluralité de langues distinctes, le moyen de traduction (30) est muni d'un moyen d'élection (32, 33) pour définir la nature desdites première et deuxième langues.

8. Dispositif (1) selon la revendication 3, **caractérisé en ce que**, le moyen de traduction (30) comportant une mémoire primaire apte à contenir le vocabulaire utilisé par une pluralité de langues distinctes, le moyen de traduction (30) est pourvu d'un moyen de téléchargement (31) pour enregistrer une nouvelle langue sur ladite mémoire primaire.

9. Dispositif (1) selon la revendication 3, **caractérisé en ce que**, le moyen de traduction (30) comportant un écran de visualisation (32), des premières et deuxièmes paroles traduites par ce moyen de traduction (30) sont d'une part transmises une fois traduites respectivement vers l'écouteur (11, 11') et le haut-parleur (15), et d'autre part, écrites sur l'écran de visualisation (32).

10. Dispositif (1) selon la revendication 3, **caractérisé en ce que** le moyen de traduction (30) comporte une mémoire secondaire apte à enregistrer des première et deuxièmes paroles, qu'il s'agisse de première et deuxièmes paroles originelles ou traduites.

11. Procédé de traduction mettant en oeuvre un dispositif de traduction (1) selon la revendication 3 pour permettre à un premier individu parlant dans une première langue de converser avec un deuxième individu parlant dans une deuxième langue distincte de la première langue, **caractérisé en ce que** ce procédé met en oeuvre successivement les étapes suivantes, durant une phase d'émission :
a1) un microphone (14) saisit des premières paroles originelles prononcées par le premier individu dans ladite première langue et envoie vers un moyen de traduction (30) un premier signal non traduit relatif à ces premières paroles originelles,
a2) le moyen de traduction (30) convertit le premier signal non traduit en un premier signal traduit correspondant à des premières paroles traduites, ces premières paroles traduites étant la traduction dans la deuxième langue des premières paroles originelles,
a3) le moyen de traduction (30) envoie le premier signal traduit vers le haut-parleur (15) qui convertit les premières paroles traduites en émission audibles,
et **en ce que** le procédé met en oeuvre successivement les étapes suivantes, durant une phase de réception :
b1) un microphone (14) saisit des deuxièmes paroles originelles prononcées par le deuxième individu dans la deuxième langue et envoie vers un moyen de traduction (30) un deuxième signal non traduit relatif à ces deuxièmes paroles originelles,
b2) le moyen de traduction (30) convertit le deuxième signal non traduit en un deuxième signal traduit correspondant à des deuxièmes paroles traduites, ces deuxièmes paroles traduites étant la traduction dans la première langue des deuxièmes paroles originelles,
b3) le moyen de traduction (30) envoie le deuxième signal traduit vers au moins un écouteur (11, 11') qui convertit ce le deuxième signal traduit en deuxièmes paroles traduites audibles.

12. Procédé selon la revendication 11, **caractérisé en ce que**, le premier individu actionne les moyens de sélection (24, 34) pour indiquer au moyen de traduction (30) si ce moyen (30) est sollicité dans le cadre de la phase de réception ou de la phase d'émission afin d'estimer si le moyen de traduction (30) doit mettre en oeuvre les étapes a2) et a3) ou les étapes b2) et b3).

13. Procédé selon la revendication 11, **caractérisé en ce que**, ledit moyen de traduction (30) comportant un moyen d'identification lui permettant de déterminer si les propos envoyés par le microphone (14) sont exprimés en première langue ou en deuxième langue, le moyen de traduction (30) utilise son moyen d'identification pour déterminer si ce moyen (30) est sollicité dans le cadre de la phase de réception ou de la phase d'émission afin d'estimer si le moyen de traduction (30) doit mettre en oeuvre les étapes a2) et a3) ou les étape b2) et b3).

## Claims

1. A headset (10) for translation between a first language of conversation and a second language of conversation, distinct from the said first language, the said headset (10) comprising: a rigid arch (12) at least one end (12') of which is provided with at least one earpiece (11, 11'), with a microphone (14) to be positioned opposite the mouth, with means (20) for linkage to a means (30) for translation between the first and second languages of conversation; the microphone (14) being connected so as to catch the first and second languages of conversation, then to transmit them to the translation means (30) by the linkage means (20) and the earpiece (11, 11') being connected so as to transmit a translation into the first language of conversion from the second language of conversation; a speaker (15) of the headset (10) being connected by the linkage means (20) so as to transmit a translation into the second language of conversation from the first language of conversation, in order that once translated the first and second languages are transmitted to this speaker (15) and the earpiece (11, 11') respectively, **characterised in that** the microphone (14) is integral with a flexible spindle (13) which is arranged on the said end (12'); the speaker (15) being arranged on this flexible spindle (13), close to the said microphone (14); this headset (10) comprising: a first means (24) for selecting translation into the first language to be transmitted to the earpiece (11, 11') or translation into the second language to be transmitted to the speaker (15); and the translation means (30) comprises another means (34) for selecting indication of translation into the first language for the earpiece (11, 11') or of translation into the second language for the speaker (15).

2. A headset (10) according to claim 1, **characterised in that** it is provided with an adjusting device (25) provided with a first and a second adjusting means (22, 23) to adjust the sound volume of the earpiece (11, 11') and the speaker (15) respectively.

3. A device (1) for translation between a first language of conversation and a second language of conversation, distinct from the said first language, this device comprising a headset (10) according to one of claims 1 and 2, **characterised in that** the said microphone (14) is connected so as to catch the first and second languages of conversation, then to transmit them to the translation means (30) by the linkage means (20); the earpiece (11, 11') being connected by the linkage means (20) so as to transmit a translation made by the translation means (30) from the second language of conversation into the first language of conversation; the speaker (15) being connected by the linkage means (20) so as to transmit a translation made by the translation means (30) from the first language of conversation into the second language of conversation, in order that once translated the first and second languages are transmitted to the speaker (15) and the earpiece (11, 11') respectively.

4. A device (1) according to claim 3, **characterised in that** the first selection means (24) is arranged so as to indicate to the translation means (30) if it should translate the comments sent by the microphone (14) into the first language and transmit them to the earpiece (11, 11') or if this translation means (30) should translate these comments sent by the microphone (14) into the second language and transmit them to the speaker (15).

5. A device (1) according to claim 3, **characterised in that** the selection means (34) is activatable and arranged so as to indicate to the translation means (30) if it should translate the comments sent by the microphone (14) into the first language and transmit them to the earpiece (11, 11') or if the translation means (30) should translate these comments sent by the microphone (14) into the second language and transmit them to the speaker (15).

6. A device (1) according to claim 3, **characterised in that** identification means enables the translation means (30) to determine if the comments sent by the microphone (14) are expressed in the first language or the second language, the translation means (30) translating these comments into the second language before sending them to the earpiece (11, 11') if the comments are expressed in the first language and the translation means (30) translating these comments into the first language before sending them to the speaker (15) if the comments are expressed in the second language.

7. A device (1) according to claim 3, **characterised in that** the translation means (30) comprising a primary memory suitable for containing the vocabulary used by a plurality of distinct languages, the translation means (30) is provided with a selection means (33) for defining the nature of the said first and second languages.

8. A device (1) according to claim 3, **characterised in that** the translation means (30) comprising a primary memory suitable for containing the vocabulary used by a plurality of distinct languages, the translation means (30) is provided with a downloading means (31) for saving a new language in the said primary memory.

9. A device (1) according to claim 3, **characterised in that** the translation means (30) comprising a display screen (32), first and second words translated by this translation means (30) are on the one hand transmitted once translated to the earpiece (11, 11') and the speaker (15) respectively and on the other hand written on the display screen (32).

10. A device (1) according to claim 3, **characterised in that** the translation means (30) comprises a secondary memory suitable for saving first and second words, whether original or translated first and second words.

11. A translation process using a translation device (1) according to claim 3 to enable a first individual speaking in a first language to converse with a second individual speaking in a second language distinct from the first language, **characterised in that** this process successively uses the following steps, during a transmission phase:
a1) a microphone (14) catches original first words said by the first individual in the said first language and sends a non-translated first signal related to these original first words to a translation means (30),
a2) the translation means (30) converts the non-translated first signal into a translated first signal corresponding to translated first words, these translated first words being the translation into the second language of the original first words,
a3) the translation means (30) sends the translated first signal to the speaker (15) which converts the translated first words into audible output,
and **in that** the process successively uses the following steps, during a receiving phase:
b1) a microphone (14) catches original second words said by the second individual in the second language and sends a non-translated second signal related to these original second words to a translation means (30),
b2) the translation means (30) converts the non-translated second signal into a translated second signal corresponding to translated second words, these translated second words being the translation into the first language of the original second words,
b3) the translation means (30) sends the translated second signal to at least one earpiece (11, 11') which converts this translated second signal into audible translated second words.

12. A process according to claim 11, **characterised in that** the first individual operates the selection means (24, 34) to indicate to the translation means (30) if demands are made on this means (30) as part of the receiving phase or as part of the transmission phase in order to assess if the translation means (30) should use steps a2) and a3) or steps b2) and b3).

13. A process according to claim 11, **characterised in that** the said translation means (30) comprising an identification means enabling it to determine if the comments sent by the microphone (14) are expressed in the first language or in the second language, the translation means (30) uses its identification means to determine if demands are made on this means (30) as part of the receiving phase or as part of the transmission phase in order to assess if the translation means (30) should use steps a2) and a3) or steps b2) and b3).

## Patentansprüche

1. Headset (10) zur Übersetzung zwischen einer ersten Konversations-Sprache und einer zweiten Konversations-Sprache, die von der ersten Sprache verschieden ist,
wobei das Headset (10) aufweist:
einen steifen Bügel (12), von dem mindestens ein Ende (12') mit mindestens einem Hörer (11, 11'), einem gegenüber dem Mund anzuordnenden Mikrophon (14), einer Verbindungseinrichtung (20) zur Verbindung mit einer Übersetzungseinrichtung (30) zur Übersetzung zwischen der ersten und der zweiten Konversations-Sprache ausgerüstet ist, wobei das Mikrophon (14) so geschaltet ist,
dass es die erste und die zweite Konversations-Sprache aufnimmt, sie dann über die Verbindungseinrichtung (20) an die Übersetzungseinrichtung (30) überträgt, und der Hörer (11, 11') so geschaltet ist, dass er eine Übersetzung in die erste Konversations-Sprache nach der zweiten Konversations-Sprache überträgt, wobei ein Lautsprecher (15) des Headsets (10) über die Verbindungseinrichtung (20) angeschlossen ist, um eine Übersetzung in die zweite Konversations-Sprache nach der ersten Konversations-Sprache zu übertragen, damit die erste und die zweite Sprache,
nachdem sie übersetzt wurden, zum Lautsprecher (15) beziehungsweise zum Hörer (11, 11') übertragen werden,
**dadurch gekennzeichnet, dass**
das Mikrophon (14) an einer flexiblen Achse (13) befestigt ist, die am Ende (12') angeordnet ist,
der Lautsprecher (15) auf dieser flexiblen Achse (13) in der Nähe des Mikrophons (14) angeordnet ist,
wobei das Headset (10) eine erste Auswahleinrichtung (24) zur Auswahl der Übersetzung in die erste, an den Hörer (11, 11') zu übertragende Sprache oder der Übersetzung in die zweite, an den Lautsprecher (15) zu übertragende Sprache aufweist, und
die Übersetzungseinrichtung (30) eine weitere Auswahleinrichtung (34) aufweist, welche eine Übersetzung in die erste Sprache für den Hörer (11, 11') oder eine Übersetzung in die zweite Sprache für den Lautsprecher (15) anzeigt.

2. Headset (10) nach Anspruch 1,
**dadurch gekennzeichnet, dass**
es mit einem Regelorgan (25) ausgerüstet ist, das mit einer ersten und einer zweiten Regeleinrichtung (22, 23) versehen ist, um die Lautstärke des Hörers (11, 11') beziehungsweise des Lautsprechers (15) zu regeln.

3. Vorrichtung (1) zur Übersetzung zwischen einer ersten Konversations-Sprache und einer zweiten Konversations-Sprache, die von der ersten Sprache verschieden ist, wobei diese Vorrichtung ein Headset (10) nach Anspruch 1 oder 2 aufweist,
**dadurch gekennzeichnet, dass**
das Mikrophon (14) so geschaltet ist, dass es die erste und die zweite Konversations-Sprache aufnimmt und sie dann über die Verbindungseinrichtung (20) an die Übersetzungseinrichtung (30) überträgt,
wobei der Hörer (11, 11') über die Verbindungseinrichtung (20) so geschaltet ist, dass er eine von der Übersetzungseinrichtung (30) durchgeführte Übersetzung in die erste Konversations-Sprache nach der zweiten Konversations-Sprache überträgt,
der Lautsprecher (15) über die Verbindungseinrichtung (20) so geschaltet ist, dass er eine von der Übersetzungseinrichtung (30) durchgeführte Übersetzung in die zweite Konversations-Sprache nach der ersten Konversations-Sprache überträgt, damit die erste und die zweite Sprache, nachdem sie übersetzt wurden, zum Lautsprecher (15) beziehungsweise zum Hörer (11, 11') übertragen werden.

4. Vorrichtung (1) nach Anspruch 3,
**dadurch gekennzeichnet, dass**
die erste Auswahleinrichtung (24) so eingerichtet ist, dass sie der Übersetzungseinrichtung (30) anzeigt, ob sie die durch das Mikrophon (14) übermittelten Worte in die erste Sprache übersetzen und sie zum Hörer (11, 11') übertragen soll oder ob die Übersetzungseinrichtung (30) diese durch das Mikrophon (14) übermittelten Worte in die zweite Sprache übersetzen und sie zum Lautsprecher (15) übertragen soll.

5. Vorrichtung (1) nach Anspruch 3,
**dadurch gekennzeichnet, dass**
die aktivierbare Auswahleinrichtung (34) so eingerichtet ist, dass sie der Übersetzungseinrichtung (30) anzeigt, ob sie die durch das Mikrophon (14) übermittelten Worte in die erste Sprache übersetzen und sie zum Hörer (11, 11') übertragen soll oder ob die Übersetzungseinrichtung (30) diese durch das Mikrophon (14) übermittelten Worte in die zweite Sprache übersetzen und sie zum Lautsprecher (15) übertragen soll.

6. Vorrichtung (1) nach Anspruch 3,
**dadurch gekennzeichnet, dass**
eine Identifizierungseinrichtung der Übersetzungseinrichtung (30) festzustellen erlaubt, ob die durch das Mikrophon (14) übermittelten Worte in der ersten Sprache oder der zweiten Sprache ausgedrückt sind, wobei die Übersetzungseinrichtung (30) diese Worte in die zweite Sprache übersetzt, bevor sie diese zum Hörer (11, 11') übermittelt, wenn die Worte in der ersten Sprache ausgedrückt sind, und die Übersetzungseinrichtung (30) diese Worte in die erste Sprache übersetzt, bevor sie diese zum Lautsprecher (15) übermittelt, wenn die Worte in der zweiten Sprache ausgedrückt sind.

7. Vorrichtung (1) nach Anspruch 3,
**dadurch gekennzeichnet, dass**
die Übersetzungseinrichtung (30) einen primären Speicher aufweist, der so ausgelegt ist, dass er das durch eine Vielzahl unterschiedlicher Sprachen verwendete Vokabular enthalten kann, und die Übersetzungseinrichtung (30) mit einer Wahleinrichtung (33) ausgerüstet ist, welche die Art der ersten und der zweiten Sprache festlegt.

8. Vorrichtung (1) nach Anspruch 3,
**dadurch gekennzeichnet, dass**
die Übersetzungseinrichtung (30) einen primären Speicher aufweist, der so ausgelegt ist, dass er das durch eine Vielzahl unterschiedlicher Sprachen verwendete Vokabular enthalten kann, und die Übersetzungseinrichtung (30) mit einer Download-Einrichtung (31) versehen ist, um eine neue Sprache in den Hauptspeicher zu speichern.

9. Vorrichtung (1) nach Anspruch 3,
**dadurch gekennzeichnet, dass**
die Übersetzungseinrichtung (30) einen Anzeige-Bildschirm (32) aufweist und erste und zweite durch die Übersetzungseinrichtung (30) übersetzte Worte nach der Übersetzung zum einen zum Hörer (11, 11') beziehungsweise zum Lautsprecher (15) übertragen werden und zum anderen auf dem Anzeige-Bildschirm geschrieben werden.

10. Vorrichtung (1) nach Anspruch 3,
**dadurch gekennzeichnet, dass**
die Übersetzungseinrichtung (30) einen sekundären Speicher aufweist, der so ausgelegt ist, dass er erste und zweite Worte unabhängig davon speichert, ob es sich dabei um ursprüngliche oder um übersetzte Worte handelt.

11. Verfahren zur Übersetzung, bei dem eine Vorrichtung (1) zur Übersetzung nach Anspruch 3 eingesetzt wird, das einer ersten Person, die in einer ersten Sprache spricht, ein Gespräch mit einer zweiten Person erlaubt, die in einer zweiten, von der ersten Sprache verschiedenen Sprache spricht,
**dadurch gekennzeichnet, dass**
bei diesem Verfahren während einer Emissionsphase nacheinander folgende Schritte durchgeführt werden:
a1) ein Mikrophon (14) nimmt die ersten ursprünglichen Worte, die von der ersten Person in der ersten Sprache gesprochen werden, auf und schickt ein erstes, nicht übersetztes Signal, das sich auf diese ersten ursprünglichen Worte bezieht, zu einer Übersetzungseinrichtung (30),
a2) die Übersetzungseinrichtung (30) wandelt das erste, nicht übersetzte Signal in ein erstes übersetztes Signal um, das ersten übersetzten Worten entspricht, wobei diese ersten übersetzten Worte die Übersetzung der ersten ursprünglichen Worte in die zweite Sprache darstellen,
a3) die Übersetzungseinrichtung (30) schickt das erste übersetzte Signal zum Lautsprecher (15), der die ersten übersetzten Worte in eine hörbare Form umwandelt und aussendet,
sowie dadurch, dass
bei dem Verfahren während einer Empfangsphase nacheinander folgende Schritte durchgeführt werden:
b1) ein Mikrophon (14) nimmt ursprüngliche zweite Worte, die die von der zweiten Person in der zweiten Sprache gesprochen werden, auf und schickt ein zweites, nicht übersetztes Signal, das sich auf diese zweiten ursprünglichen Worte bezieht, zu einer Übersetzungseinrichtung (30),
b2) die Übersetzungseinrichtung (30) wandelt das zweite, nicht übersetzte Signal in ein zweites übersetztes Signal um, das zweiten übersetzten Worten entspricht, wobei diese zweiten übersetzten Worte die Übersetzung der zweiten ursprünglichen Worte in die erste Sprache darstellen,
b3) die Übersetzungseinrichtung (30) schickt das zweite übersetzte Signal zu mindestens einem Hörer (11, 11'), der dieses zweite übersetzte Signal in zweite übersetzte hörbare Worte umwandelt.

12. Verfahren nach Anspruch 11,
**dadurch gekennzeichnet, dass**
die erste Person die Auswahleinrichtungen (24, 34) betätigt, um der Übersetzungseinrichtung anzuzeigen, ob diese Einrichtung (30) im Rahmen der Empfangsphase oder der Emissionsphase in Anspruch genommen wird, um abzuschätzen, ob die Übersetzungseinrichtung (30) die Schritte a2) und a3) oder die Schritte b2) und b3) durchführen muss.

13. Verfahren nach Anspruch 11,
**dadurch gekennzeichnet, dass**
die Übersetzungseinrichtung (30) eine Identifizierungseinrichtung aufweist, die ihr zu ermitteln erlaubt, ob die durch das Mikrophon (14) übermittelten Worte in der ersten Sprache oder in der zweiten Sprache ausgedrückt sind, und die Übersetzungseinrichtung (30) ihre Identifizierungseinrichtung zur Feststellung verwendet, ob diese Einrichtung (30) im Rahmen der Empfangsphase oder der Emissionsphase in Anspruch genommen wird, um abzuschätzen, ob die Übersetzungseinrichtung (30) die Schritte a2) und a3) oder die Schritte b2) und b3) durchführen muss.
